(19) Europäisches Patentamt
European Patent Office
Office européen des brevets

(11) **EP 2 259 683 B1**

(12) **FASCICULE DE BREVET EUROPEEN**

(45) Date de publication et mention
de la délivrance du brevet:
**02.04.2014  Bulletin 2014/14**

(51) Int Cl.:
***A01N 53/08*** *(2006.01)*      ***A01N 25/02*** *(2006.01)*
***A01N 25/04*** *(2006.01)*

(21) Numéro de dépôt: **09713613.9**

(22) Date de dépôt: **18.02.2009**

(86) Numéro de dépôt international:
**PCT/EP2009/051899**

(87) Numéro de publication internationale:
**WO 2009/103725 (27.08.2009 Gazette 2009/35)**

(54) **COMPOSITION CONCENTRÉE DE CYPERMÉTHRINE**

KONZENTRIERTE CYPERMETHRIN ZUSAMMENSETZUNG

CONCENTRATED CYPERMETHRIN COMPOSITION

(84) Etats contractants désignés:
**AT BE BG CH CY CZ DE DK EE ES FI FR GB GR
HR HU IE IS IT LI LT LU LV MC MK MT NL NO PL
PT RO SE SI SK TR**
Etats d'extension désignés:
**AL BA RS**

(30) Priorité: **18.02.2008  BE 200800092**

(43) Date de publication de la demande:
**15.12.2010  Bulletin 2010/50**

(73) Titulaire: **Agriphar
4102 Seraing (Ougrée) (BE)**

(72) Inventeur: **PIROTTE, Alan
B-6660 Houffalize (BE)**

(74) Mandataire: **Brants, Johan P.E. et al
Brantsandpatents bvba
Guldensporenpark 75
9820 Merelbeke (BE)**

(56) Documents cités:
**WO-A-2004/089083      WO-A-2006/002984
US-A1- 2005 215 433**

• **"Crop Protection Formulations Emulsifiable
Concentrates" [Online] 2002, CLARIANT ,
FRANKFURT AM MAIN (GERMANY) ,
XP002503820 Extrait de l'Internet: URL:http:
//fun.clariant.com/C125691A003596
E5/vwLookupDownloads/Crop_Protection_
Formu lations_Emulsifiable_Concentrate.pdf/
$FILE /Crop_Protection_Formulations_
Emulsifiable _Concentrate.pdf> page 5, colonne
1, alinéa 2 - alinéa 4 page 10, colonne 1 page 14**

Remarques:
Le dossier contient des informations techniques
présentées postérieurement au dépôt de la demande
et ne figurant pas dans le présent fascicule.

EP 2 259 683 B1

**Description**

La présente invention se rapporte à une composition liquide insecticide ou pesticide comprenant un composé pyréthrinoïde choisi parmi l'alpha-cyperméthrine, la beta-cyperméthrine, la cyperméthrine, la zeta-cyperméthrine et leurs mélanges à haute concentration dans un solvant approprié choisi dans le groupe constitué d'un biodiesel ou d'un glycol, d'un ether de glycol, d'une huile végétale ou d'un solvant naphta aromatique en $C_7$ à $C_{20}$ et leur mélange.

De telles compositions liquides sont généralement connues comme étant des compositions liquides concentrées à diluer telles qu'un concentré émulsionnable ou un concentré soluble.

Ces concentrés présentent l'avantage de permettre une mise en suspension facile ainsi qu'une bonne tenue en suspension et qu'une bonne pénétration du produit dans les végétaux ou à travers la cuticule de l'insecte cible. Ils présentent une efficacité supérieure et n'émettent pas de poussière tout en étant aisés à diluer.

Des formulations de composés pyréthrinoïdes sont connues généralement à une concentration entre 25 et 250 g/l sous la forme d'un concentré émulsionnable. Dans ce type de concentré, la matière active est solubilisée si elle est solide au départ ou diluée si elle est liquide au départ dans un solvant généralement insoluble dans l'eau.

Cette solution comprenant de la matière active dans un solvant approprié, généralement organique, est adjuvantée à l'aide d'un ou de plusieurs tensioactifs pour permettre une émulsion dans l'eau lors de son utilisation finale par l'agriculteur qui, pour pouvoir la pulvériser sur son champ, doit la diluer dans l'eau.

Il est un but de l'invention de mettre au point une formulation ayant un coût par hectare pour l'agriculteur qui est inférieur à une formule de composé pyréthrinoïde ou de pyrèthre de 25 à 250 g/l tout en présentant une efficacité biologique au moins équivalente, ainsi qu'un classement toxicologique inférieur ou égal à la formulation de 25 à 250 g/l de composé pyréthrinoïde ou pyrèthre.

Dès lors suivant l'invention il est prévu une composition insecticide comprenant de 425 à 750 g/l d'un composé pyréthrinoïde choisi parmi l'alpha-cyperméthrine, la beta-cyperméthrine, la cyperméthrine, la zeta-cyperméthrine et leurs mélanges, un ou plusieurs solvants appropriés choisi dans le groupe constitué d'un biodiesel ou d'un glycol, d'un ether de glycol, d'une huile végétale ou d'un solvant naphta aromatique en $C_7$ à $C_{20}$ et leur mélange et au moins un tensioactif.

Des formulations de concentrés émulsionnables ayant une concentration égale ou inférieure à 400 g/l de cyperméthrine existent sur le marché. Toutefois aucune concentration supérieure à 400 g/l n'a été commercialisée (voir par exemple "Crop Protection Formulations Emulsifiable cConcentrates-clariant").

La composition suivant l'invention comprenant de 425 g/l à 750 g/l d'un composé pyréthrinoïde, choisi parmi l'alpha-cyperméthrine, la beta-cyperméthrine, la cyperméthrine, la zeta-cyperméthrine et leurs mélanges, lorsqu'elle est appliquée par hectare, présente une efficacité du composé pyrréthrinoïde égale ou supérieure par rapport à une composition du composé pyréthrinoïde entre 25 et 250 g/l en concentré émulsionnable, alors que les mêmes concentrations d'ingrédient actif par hectare sont appliquées sur le champ.

Il a donc été trouvé de manière très surprenante qu'en utilisant un solvant approprié identique au solvant généralement utilisé pour des formulations du composé pyréthrinoïde de 25 à 250 g/l mais en réduisant par huit la quantité de tensioactif utilisé ainsi que de solvant appliquées par hectare, l'efficacité était égale ou supérieure.

En outre, puisque la concentration du concentré émulsionnable selon l'invention est plus élevée, en usage final, c'est-à-dire, par exemple en g/ha, le volume appliqué de concentré émulsionnable sera d'au moins 5 fois moins par rapport à une composition du composé pyréthrinoïde à 100 g/l. Dès lors, les végétaux occupant le terrain sur lequel la composition de concentré émulsionnable selon l'invention reçoivent, pour une quantité de composé pyrethrinoide identique, 5 fois moins de gouttelettes émulsionnées. Dès lors, puisque le composé pyréthrinoïde est un insecticide / pesticide de contact et puisque les plantes ou végétaux sont recouverts de 5X moins de gouttelettes émulsionnées, la probabilité qu'un insecte trouve sur son chemin une gouttelette et entre en contact avec le composé pyréthrinoïde est moins élevée lors de l'utilisation d'une composition de concentré émulsionnable selon l'invention, ce qui ne laissait pas présager une efficacité supérieure.

En considérant que les gouttelettes composées de solvant approprié et de composé pyréthrinoïde de la composition suivant l'invention et de la composition de composé pyréthrinoïde à 100 g/l connue, présentent la même taille, alors cinq fois moins de gouttelettes seront présentes pour la composition de composé pyréthrinoïde suivant l'invention pour une même surface et dès lors une probabilité inférieure de contact entre l'insecte et la cyperméthrine sera obtenue.

Pourtant, l'efficacité s'est révélée meilleure ainsi que l'impact écologique de la formulation étant donné qu'il y a un facteur 8 de réduction d'adjuvant libéré dans l'environnement comprenant le solvant ainsi que le tensioactif et le coût par hectare du traitement diminué.

Dans une forme de réalisation particulièrement préférentielle, ledit composé pyréthrinoïde est présent dans une quantité comprise dans la plage allant de 450 à 600 g/l, plus particulièrement de 480 à 550 g/l, et est de préférence d'environ 500 g/l.

De plus, dans la composition suivant l'invention, ledit tensioactif est choisi dans le groupe constitué des tensioactifs ioniques et des tensioactifs non ioniques, tels que les alcoxylates d'alkylphénol (par exemple Berol 02), les alcoxylates d'alcool (par exemple, le Tensiofix 96DB10, le tensioactif B9718, le Tergitol XD), des ethers de phosphate (Rhodafac MB), des alkylpoly-glucosides ( Glucapon 650), des esters de sucrose (SisternaSP), des méthoxypolyéthylène glycols (Carbowax MPEG), des alcoxylates de tristyrylphénol (soprophor BSU), des alcoxylates d'huile de ricin (Alkamuls BR) des sulphosuccinates (Eurowett PG), des sels de sulphonates d'alkylbenzène (Tensiofix KL70) et analogues.

De préférence, le tensioactif est présent en une quantité allant de 40 g/l à 200 g/l, de préférence 60 à 150 g/l, et de manière plus préférentielle de 80 à 130 g/l.

Ledit solvant est de préférence solvant naphta aromatique en C7 à C20 ou en C8 à C13 et de manière plus préférentielle en C8 à C11, lequel a finalement un impact toxicologique réduit.

Entre autres, ledit solvant est présent dans la composition selon l'invention en une quantité allant de 200 g/l à 600 g/l, de préférence de 250 à 550 g/l et de manière plus préférentielle d'environ 450 g/l ce qui, ramené à une dose par hectare, est une quantité réduite par rapport aux compositions pourtant moins concentrées en matière active de l'état de la technique.

Dans une forme de réalisation particulière suivant l'invention, la composition comprend en outre un acide dans une quantité allant de 0,05 g/l à 3 g/l et est en particulier de l'acide acétique à une concentration d'environ 0,1 g/l permettant de stabiliser le composé pyréthrinoïde selon l'invention.

D'autres formes de réalisation de la composition suivant l'invention sont indiquées dans les revendications annexées.

L'invention a aussi pour objet un procédé de fabrication d'un concentré composé pyréthrinoïde ayant une concentration de 425 à 750 g/l comprenant :

- une addition d'un solvant, en particulier d'un solvant naphta aromatique en C7 à C20, plus particulièrement en C8 à C13, et de manière plus préférentielle en C8 à C11, dans une cuve en acier inoxydable de formulation ayant une capacité de 500 à 40 000 litres et comprenant un système d'agitation.
- une addition d'un ou de plusieurs tensioactifs parfois préalablement chauffés avant leur introduction dans la cuve de formulation,
- une addition d'acide acétique à 0,1 g/l à la cuve de formulation finale,
- une agitation des composés susdits,
- une addition de cyperméthrine préalablement préchauffée entre 35 et 70°C dans la cuve de formulation, et
- un ajustement du volume au volume final à l'aide du solvant naphta aromatique à une température de 20°C.

Avantageusement, le procédé selon l'invention comprend un mélange additionnel pendant environ 20 minutes et/ou une filtration sur un filtre ayant un maillage de 150 micromètres, ainsi qu'un conditionnement.

D'autres formes de réalisation du procédé selon l'invention sont indiquées dans les revendications annexées.

## Exemple comparatif 1

Pour produire une formulation ayant un coût par hectare avantageux par rapport à une formulation comprenant de la cyperméthrine à 100 g/l et présentant une efficacité biologique supérieure ou au moins égale à cette même formulation à 100 g/l ainsi que présentant un classement toxicologique inférieur ou égal à une formulation de cyperméthrine à 100 g/l, il a été imaginé de conserver la concentration de 100 g/l en substance active, en l'occurrence dans ce cas-ci de la cyperméthrine et de remplacer une quantité maximale de solvant pétrolier par de l'eau et un solvant végétal. Ce qui présente l'avantage de diminuer les coûts de production et donc le coût final auprès de l'agriculteur et de supprimer ou réduire la quantité de solvant naphta aromatique au profit d'un solvant d'origine végétal et donc l'impact environnemental.

Pour pouvoir remplacer une grande partie de solvant par de l'eau, c'est-à-dire pour mélanger de manière stable une phase organique avec une phase aqueuse, la cyperméthrine à 100 g/l a été formulée sous la forme d'une émulsion concentrée dans l'eau que l'on a appelé cyperméthrine EW. Dans ce type de formulation, l'émulsion a été formée au préalable et l'agriculteur n'a plus qu'à diluer le produit émulsionné avec de l'eau avant de le pulvériser. Typiquement, ce type de formulation remplace une quantité majeure de solvant naphta aromatique par du biodiesel ($\pm$ 15 %) et le reste par de l'eau,

On a préparé une composition de cyperméthrine à 100 g/l (cyperméthrine EW) de la façon suivante : 107 g/l de cyperméthrine à 93 % disponible auprès de Mitchell Cotts Chemicals (Royaume-Uni) ont été mélangés avec 150 g de biodiesel de la marque radia 7961 disponible auprès de Atofina-Oleochemicals, Petrofina (Royaume-Uni) ainsi que 50 g de tensioactif (Tensiofix DB08, provenant de la société Omnichem, Belgique). On a ajouté du propylène glycol à raison de 50 g, un antimousse Rhodorsil 454 provenance de la société Rhodia à raison de 2 g ainsi qu'un biocide (benzisothiazoline-3-one) à raison de 0,25 g. On a ensuite ajouté de l'eau pour porter le volume final à 1 litre (480 g). La composition a été finement émulsionnée par un disperseur de type Rotor-stator (par exemple Silverson).

L'efficacité de l'émulsion concentrée dans l'eau à 100 g/l de cyperméthrine a été testée par rapport à l'efficacité d'une composition de cyperméthrine à 100 g/l dans un solvant naphta aromatique en C9. On a appliqué des doses de 25, 20, 15 grammes par hectare.

Les résultats du test d'efficacité sont présentés au Tableau 1.

**Tableau 1**

| Composition | Dose en g/ha | Efficacité sur le nombre de pucerons vivants | |
|---|---|---|---|
| | | Jour 1 | Jour 7 |
| Cyperméthrine à 100 g/l en concentré émulsionnable dans un solvant naphta aromatique | 25 | 72,42 | 98,04 |
| | 20 | 72,07 | 95,29 |
| | 15 | 68,20 | 96,23 |
| Cyperméthrine à 100 g/l en émulsion concentrée dans l'eau (EW) | 25 | 72,43 | 94,89 |
| | 20 | 54,82 | 86,23 |
| | 15 | 51,20 | 88,62 |

Comme on peut le voir, surtout pour les doses de 15 et 20 g de cyperméthrine par hectare, l'efficacité pour la cyperméthrine à 100 g/l en émulsion concentrée (EW) dans l'eau est particulièrement inférieure.

Pour tous les traitements et toutes les dates d'évaluation, l'homogénéité de la variance a été testée par le test de Bartlett. Lorsque ce test n'indiquait aucune homogénéité de variance, les valeurs transformées de log (x+1) ou de $\sqrt{}$(arcsin) ont été utilisées pour l'analyse de la variance. Si aucune homogénéité de variance n'était toujours obtenue par cette transformation, aucune analyse statistique n'a été réalisée pour cette date.

Les moyennes de traitement de chaque date d'évaluation ont été calculées et comparées en utilisant le test de Student Newman Keuls (p=0,05).

Dans les cas d'infestation initiale homogène, on a calculé l'efficacité selon la formule

$$E = \frac{(control - trt)}{control} 100 \quad \textbf{(Abbott)}$$

dans laquelle E représente l'efficacité en %, control représente le pourcentage d'infestation dans les plots témoins, trt représente le pourcentage d'infestation dans les plots traités.

Si la variabilité initiale était considérable, toutes les valeurs ont été transformées selon la formule de Henderson et Tilton (1955) pour compenser la variabilité parmi les plots :

$$E_H = \left[ 1 - \left( \frac{N_{Ta} * N_{Cb}}{N_{Tb} * N_{CA}} \right) \right] * 100$$

dans laquelle

$E_H$     représente l'efficacité selon Henderson et Tilton

$N_{CA}$     représente le nombre de non-traités à la date d'évaluation après l'application

$N_{Cb}$     représente le nombre de non-traités avant l'application

$N_{Ta}$     représente le nombre de traités à la date d'évaluation après l'application

$N_{Tb}$     représente le nombre de traités avant l'application.

Pour compenser la variabilité initiale, une analyse statistique a été réalisée sur les valeurs transformées.

Dès lors, l'efficacité de la cyperméthrine sous la forme d'une émulsion concentrée (EW) dans l'eau en fait un produit peu concurrentiel sur le marché. Dès lors il a été décidé de mettre au point en parallèle deux compositions présentant des concentrations différentes : une composition de cyperméthrine à 50 g/l en concentré émulsionnable et une composition de cyperméthrine à 500 g/l sous la forme d'un concentré émulsionnable également.

## Exemple comparatif 2

Composition de cyperméthrine à 50 g/l sous la forme d'un concentré émulsionnable (EC) en utilisant un biodiesel comme solvant.

La démarche pour l'Exemple 2 consistait à mettre au point une formule moins concentrée qui permettrait d'obtenir un classement toxicologique plus favorable tout en restant aussi efficace que la cyperméthrine à 100 g/l en concentré émulsionnable et présentant un prix de revient par hectare inférieur ou égal.

La composition de cyperméthrine à 50 g/l en concentré émulsionnable a été préparée en mélangeant 53,5 g de cyperméthrine à 93 % avec 100g de tensioactif et 750g de biodiesel. Le volume final était de 1 litre.

Nous avons effectivement réussi à diminuer le classement toxicologique de nocif à irritant (classification de Xn à Xi).

On a effectué un test d'efficacité par rapport à une composition de concentré émulsionnable à 100g/l de cyperméthrine à base d'un solvant pétrolier dans lequel des parcelles de 30 m$^2$ de choux-fleurs infestés par des lépidoptères ont été traitées par différentes compositions. Les résultats du test d'efficacité sont présentés au Tableau 2. L'efficacité au Tableau 2 est calculée suivant la même méthode que pour le Tableau 1. Au Tableau 2, l'efficacité mentionnée est l'efficacité (%) selon Henderson et Tilton, tandis que l'efficacité donnée entre parenthèses est l'efficacité ( %) selon Abbott.

**Tableau 2**

| Composition | Dose en g/ha | Efficacité sur le nombre total de larves | | | | |
|---|---|---|---|---|---|---|
| | | Jour 1 | Jour 3 | Jour 5 | Jour 9 | Jour 16 |
| Témoin | 0 | 3,25 a | 2,75 a (-) | 4,50 a (-) | 3,25 a (-) | 3,00 a (-) |
| Cyperméthrine à 50 g/l en concentré émulsionnable dans un biodiesel | 18,75 | 3,00 a | 3,75 a (0,00) | 2,00 a (55,56) | 2,00 a (38,46) | 0,50 b (83,33) |
| | 25 | 2,25 a | 4,00 a (0,00) | 1,75 a (61,11) | 2,00 a (38,46) | 0,25 b (91,67) |
| | 30 | 2,75 a | 1,25 a (54,55) | 1,25 a (72,22) | 1,25 a (61,54) | 0,25 b (91,67) |
| Cyperméthrine à 100 g/l en concentré émulsionnable dans un solvant naphta aromatique | 25 | 3,00 a | 2,50 a (9,09) | 1,25 a (72,22) | 0,75 a (76,92) | 0,25 b (91,67) |

Comme on peut le voir du Tableau 2, l'efficacité biologique était légèrement en retrait pour la composition de cyperméthrine à 50 g/l en outre le coût par hectare traité augmentait significativement à cause de la déconcentration ainsi que de l'augmentation du coût des adjuvants, d'emballage, de transport ainsi que la présence massive de biodiesel qui est plus cher que le solvant naphta aromatique. Pour ces deux raisons la cyperméthrine à 50 g/l sous la forme d'un concentré émulsionnable n'a pas été retenue.

**Exemple selon l'invention**

Préparation et test de la stabilité de la composition de cyperméthrine à 500 g/l sous la forme d'un concentré émulsionnable.

La mise au point d'une telle composition de cyperméthrine à environ 500 g/l permettrait de mettre au point une formule plus concentrée pour être plus concurrentielle au niveau du prix de revient par hectare traité. Toutefois, la grande inconnue était de savoir si nous allions pouvoir stabiliser la formule puisqu'aucune formulation de concentré émulsionnable ayant une concentration supérieure à 400 g/l en cyperméthrine n'existait sur le marché jusqu'à ce jour.

A cette fin, nous avons réalisé une première composition de cyperméthrine à 500 g/l sous la forme d'un concentré émulsionnable à base de biodiesel afin de réduire l'impact toxicologique sur l'environnement lié aux adjuvants ainsi qu'une formulation de cyperméthrine à 500 g/l sous la forme d'un concentré émulsionnable à base d'un solvant naphta aromatique qui devrait permettre d'augmenter l'efficacité.

Nous avons analysé les toxicités des deux formules de cyperméthrine susdites et, curieusement, la cyperméthrine à base de biodiesel a été considérée comme étant toxique par ingestion (voie orale) tandis que la cyperméthrine à base de solvant naphta aromatique n'a été considérée que nocive (classification Xn). Dès lors, il a été décidé de ne réaliser les tests d'efficacité que sur la base de la composition de cyperméthrine à 500 g/l sous la forme d'un concentré émulsionnable à base de solvant naphta aromatique.

Pour réaliser la composition de cyperméthrine à 500 g/l sous la forme d'un concentré émulsionnable à base d'un solvant naphta aromatique,, on a placé, dans une cuve de formulation d'une capacité 500 à 40 000 litres comprenant un agitateur, 80 % du volume final de Solvesso 100 disponible auprès de la société Exxon Mobil Chemical, auxquels on a ajouté 80 g/l de Tensiofix 9718, disponible auprès de la société OmniChem (Belgique) préalablement chauffé à 55°C avant son introduction dans la cuve. On a ensuite ajouté le Tensiofix DB10 disponible auprès de la société OmniChem (Belgique) préalablement chauffé à 80°C avant son introduction dans la cuve à raison de 10 g/l par rapport au volume final ainsi que 0,1 g/l d'acide acétique. On a ensuite ajouté la cyperméthrine pure, disponible auprès de Mitchell Cotts Chemicals (Royaume-Uni) à raison de 500 g/l également préalablement chauffée à 65°C avant son introduction dans la cuve de mélange. Le mélange était maintenu et le volume final a été ajusté dans la cuve de formulation à l'aide de Solvesso100 disponible auprès de la société Exxon Mobil Chemical. Le mélange a ensuite été encore mélangé pendant 30 minutes et ensuite filtré sur un filtre présentant une porosité de 150 micromètres. La composition a ensuite été emballée et pesée avant que les tests de stabilité soient effectués.

Un test de stabilité de la composition de cyperméthrine à 500 g/l suivant l'invention a ensuite été effectué. La stabilité a été déterminée suivant la technique de vieillissement accélérée selon une méthode officielle pour l'agrochimie qui est la méthode CIPAC MT36, 14 jours à 54°C). Après analyse de l'échantillon, comme on peut le voir au Tableau 3, les paramètres physico-chimiques n'ont pas subi de modification majeure et la formulation peut être considérée comme stable.

**Tableau 3**

| Analyse | | |
|---|---|---|
| | Echantillon initial | Echantillon 14 jours à 54°C |
| Aspect :<br>Etat physique<br>opacité<br>couleur<br>homogénéité | liquide<br>limpide<br>jaune<br>homogène | liquide<br>limpide<br>jaune<br>homogène |
| Odeur: | solvant | solvant |
| Teneur : | 494,9 g/l | 494,8 g/l |
| Densité : | 1,042 kg/l (à 20°C) | |
| Point éclair : | 47°C | - |
| pH 1 % | 5,0 | 5,0 |
| Emulsion :<br>0,0076 %<br>    eau CIPAC A<br>    eau CIPAC C<br>0,05%<br>    eau CIPAC A<br>    eau CIPAC C | après 4 h<br><br>99,2 %<br>99,3%<br><br>96,8%<br>96,5% | après 4 h<br><br>99,5%<br>99,2%<br><br>98,2%<br>99,2% |
| Mousse après 1 min<br>30°C - 0,05 % - CIPAC D | 10 ml | 8 ml |

En outre, un test de conditionnement a été réalisé. Les observations ont été réalisées après 14 jours à 54°C. Les conditionnements en PET (polyéthylène téréphtalate), en HDPE (polyéthylène haute densité) fluoré et en HDPE coex EV/OH (polyéthylène haute densité co-extrudé avec un polymère éthylvinylalcohol) conviennent pour le conditionnement de la cyperméthrine à 500g/l sous la forme d'un concentré émulsionnable. Les résultats sont présentés au Tableau 4 ci-dessous.

**Tableau 4**

| Observations après 14 jours à 54°C | PET | HDPE fluoré | HDPE coex EV/OH |
|---|---|---|---|
| Aspect | pas de déformation, pas d'altération du bidon | pas de déformation, pas d'altération du bidon | pas de déformation, pas d'altération du bidon |
| Variation de masse | -0,02 % | -0,03 % | -0,01 % |

Nous avons ensuite réalisé un test d'efficacité de la composition de cyperméthrine à 500 g/l sous la forme d'un concentré émulsionnable. Le test d'efficacité a été réalisé de manière identique à celui pour la cyperméthrine à 50 g/l de l'exemple comparatif 2. Les conditions expérimentales ainsi que les conditions d'obtention de l'efficacité sont identiques.

Les résultats du test d'efficacité sont présentés au Tableau 5.

**Tableau 5**

| Composition | Dose en g/ha | Efficacité sur le nombre total de larves | | | | |
|---|---|---|---|---|---|---|
| | | Jour 1 | Jour 3 | Jour 5 | Jour 9 | Jour 16 |
| Témoin | 0 | 3,25 a | 2,75 a (-) | 4,50 a (-) | 3,25 a (-) | 3,00 a (-) |
| Cyperméthrine à 50 g/l en concentré émulsionnable dans un biodiesel | 18,75 | 3,00 a | 3,75 a (0,00) | 2,00 a (55,56) | 2,00 a (38,46) | 0,50 b (83,33) |
| | 25 | 2,25 a | 4,00 a (0,00) | 1,75 a (61,11) | 2,00 a (38,46) | 0,25 b (91,67) |
| | 30 | 2,75 a | 1,25 a (54,55) | 1,25 a (72,22) | 1,25 a (61,54) | 0,25 b (91,67) |
| Cyperméthrine à 500 g/l en concentré émulsionnable dans un solvant naphta aromatique | 25 | 4,25 a | 1,50 a (45,45) | 0,25 a (94,44) | 0,25 a (93,31) | 0,25 b (91,67) |
| Cyperméthrine à 100g/l en concentré émulsionnable dans un solvant naphta aromatique | 25 | 3,00 a | 2,50 a (9,09) | 1,25 a (72,22) | 0,75 a (76,92) | 0,25 b (91,67) |

Comme on peut le voir, la formulation de cyperméthrine à 500 g/l selon l'invention à un dosage de 25 g par hectare se montre aussi efficace, voire plus efficace que la composition de cyperméthrine à 100 g/l sous la forme d'un concentré émulsionnable.

La formulation selon l'invention est particulièrement inventive en particulier, au niveau de la réduction de l'impact sur l'écologie. En effet, dans une composition de cyperméthrine à 100 g/l sous la forme d'un concentré émulsionnable, on trouve en moyenne 80 g/l de tensioactif et 745 g/l de solvant naphta aromatique, ce qui fait un total de 825 g/l d'adjuvants classés nocifs pour l'environnement.

Dans une composition selon l'invention, on trouve 100 g/l de tensioactif ainsi que 410 g/l de solvant naphta aromatique léger, ce qui fait un total de 510 g/l d'adjuvants classés nocifs pour l'environnement.

Pour une application à 25 g de matière active par hectare, on utilise 0;25 L de composition de cyperméthrine à 100 g/l sous la forme d'un concentré émulsionnable, ce qui représente 206 g par hectare d'adjuvants classés nocifs pour l'environnement.

La composition selon l'invention à 500 g/l de Cyperméthrine nécessite environ une utilisation de 0,05 l par hectare de produit formulé ce qui donne une dose d'adjuvant de 25 g par hectare de substances nocives pour l'environnement soit environ 8 fois moins. Dès lors, la composition selon l'invention peut se targuer d'avoir un impact bien plus réduit sur l'environnement par rapport à la composition connue à 100 g/l.

Le solvant naphta aromatique peut être , du Solvesso 100, du Solvesso 100S, du Solvesso 150, du Solvesso 150ND, du Solvesso 200, du Solvesso 200ND, tous disponibles auprès de la société Exxon Mobil Chemical.

**Revendications**

1. Composition liquide insecticide/pesticide sous forme de concentré émulsionnable d'un composé pyréthrinoïde, un ou plusieurs solvants appropriés choisi dans le groupe constitué d'un biodiesel ou d'un glycol, d'un éther de glycol, d'une huile végétale ou d'un solvant naphta aromatique en C7 à C20 et leur mélange et au moins un tensioactif, **caractérisé en ce que** ledit concentré émulsionnable comprend de 425 g/l à 750 g/l dudit composé pyrétrinoïde, dans laquelle ledit composé pyréthrinoïde est choisi dans le groupe constitué de l'alpha-cyperméthrine, de la beta-cypermethrine, de la cypermethrine, de la zeta-cypermethrine ainsi que leurs mélanges.

2. Composition selon la revendication 1, dans laquelle ledit composé pyréthrinoïde est cypermethrine.

3. Composition selon la revendication 2, dans laquelle le(s)dit(s) un ou plusieurs solvants appropriés est un solvant naphta aromatique en C7 à C20.

4. Composition selon la revendication 1, dans laquelle ledit composé pyréthrinoïde est présent dans une quantité comprise dans la plage allant de 425 à 575 g/l.

5. Composition selon la revendication 4, dans laquelle ledit composé pyréthrinoïde est présent dans une quantité d'environ 500 g/l.

6. Composition selon l'une quelconque des revendications précédentes, dans laquelle ledit tensioactif est choisi dans le groupe constitué des tensioactifs ioniques et des tensioactifs non ioniques.

7. Composition selon l'une quelconque des revendications précédentes, dans laquelle ledit solvant naphta aromatique en C7 à C20 est un solvant naphta aromatique en C8 à C13.

8. Composition selon l'une quelconque des revendications précédentes, comprenant en outre un acide à une concentration de 0,05 g/l à 3 g/l.

9. Composition selon la revendication 8, dans laquelle ledit acide est de l'acide acétique à une concentration d'environ 0.1 g/l.

10. Composition selon la revendication 9, comprenant: un solvant naphta aromatique en C7 à C20, un ou plusieurs tensioactifs, d'acide acétique à 0,1 g/l, et cyperméthrine.

11. Composition selon l'une quelconque des revendications précédentes dans laquelle ledit solvant est présent en une quantité allant de 200 g/l à 600 g/l.

12. Composition selon la revendication 11, dans laquelle ledit solvant est présent en une quantité allant de 250 à 550 g/l.

13. Composition selon l'une quelconque des revendications précédentes, dans laquelle ledit tensioactif est présent en une quantité allant de 40 g/l à 200 g/l.

14. Composition selon la revendication 13, dans laquelle ledit tensioactif est présent en une quantité allant de 60 à 150 g/l.

**Patentansprüche**

1. Flüssige Insektizid-/Pestizidzusammensetzung in Form eines emulgierbaren Konzentrats einer Pyrethroidverbindung, eines oder mehrerer geeigneter Lösemittel, welche aus der Gruppe ausgewählt sind, die aus einem Biodiesel oder einem Glykol, einem Glykolether, eine pflanzlichen Öl oder einer aromatischen C7- bis C20-Kohlenwasserstofffraktion (Solvent Naphtha) und deren Mischung besteht, sowie eines Tensids, **dadurch gekennzeichnet, dass** das emulgierbare Konzentrat 425 g/l bis 750 g/l der Pyrethroidverbindung umfasst, wobei die Pyrethroidverbindung aus der Gruppe ausgewählt ist, die aus alpha-Cypermethrin, beta-Cypermethrin, Cypermethrin, zeta-Cypermethrin sowie deren Mischungen besteht.

2. Zusammensetzung nach Anspruch 1, wobei es sich bei der Pyrethroidverbindung um Cypermethrin handelt.

3. Zusammensetzung nach Anspruch 2, wobei es sich bei dem einen oder den mehreren Lösemitteln um eine aromatische C7- bis C20-Kohlenwasserstofffraktion (Solvent Naphtha) handelt.

4. Zusammensetzung nach Anspruch 1, wobei die Pyrethroidverbindung in einer Menge im Bereich von 425 bis 575 g/l vorliegt.

5. Zusammensetzung nach Anspruch 4, wobei die Pyrethroidverbindung in einer Menge von ungefähr 500 g/l vorliegt.

6. Zusammensetzung nach einem beliebigen der vorhergehenden Ansprüche, wobei das Tensid aus der Gruppe ausgewählt ist, die aus den ionischen Tensiden und den nichtionischen Tensiden besteht.

7. Zusammensetzung nach einem beliebigen der vorhergehenden Ansprüche, wobei es sich bei der aromatischen C7- bis C20-Kohlenwasserstofffraktion (Solvent Naphtha) um eine aromatische C8- bis C13-Kohlenwasserstofffraktion handelt.

8. Zusammensetzung nach einem beliebigen der vorhergehenden Ansprüche, welche darüber hinaus eine Säure in einer Konzentration von 0,05 g/l bis 3 g/l umfasst.

9. Zusammensetzung nach Anspruch 8, wobei es sich bei der Säure und Essigsäure in einer Konzentration von ungefähr 0,1 g/l handelt.

10. Zusammensetzung nach Anspruch 9, die Folgendes umfasst: eine aromatische C7- bis C20-Kohlenwasserstofffraktion (Solvent Naphtha), ein oder mehrere Tenside, Essigsäure zu 0,1 g/l, und Cypermethrin.

11. Zusammensetzung nach einem beliebigen der vorhergehenden Ansprüche, wobei die Kohlenwasserstofffraktion in einer Menge im Bereich von 200 g/l bis 600 g/l vorliegt.

12. Zusammensetzung nach Anspruch 11, wobei die Kohlenwasserstofffraktion in einer Menge im Bereich von 250 g/l bis 550 g/l vorliegt.

13. Zusammensetzung nach einem beliebigen der vorhergehenden Ansprüche, wobei das Tensid in einer Menge im Bereich von 40 g/l bis 200 g/l vorliegt.

14. Zusammensetzung nach Anspruch 13, wobei das Tensid in einer Menge im Bereich von 60 g/l bis 150 g/l vorliegt.

**Claims**

1. An insecticide/pesticide liquid composition in the form of an emulsionable concentrate of a pyrethrinoid compound, one or more appropriate solvents selected from the group of a biodiesel or a glycol, a glycol ether, a vegetable oil or a C7 to C20 aromatic naphtha solvent and there mixtures and at least one surfactant, **characterized in that** said emulsionable concentrate comprises 425 g/l to 750 g/l of said pyrethrinoid compound, wherein said pyrethrinoid compound is selected from the group consisting of alpha-cypermethrin, beta-cypermethrin, cypermethrin, zeta-cypermethrin and mixtures thereof.

2. Composition according to claim 1, wherein said pyrethrinoid compound is cypermethrin.

3. Composition according to claim 2, wherein said one or more appropriate solvents is a C7 to C20 aromatic naphtha solvent.

4. Composition according to claim 1, wherein said pyrethrinoid compound is present in a quantity comprised within the range of 425 to 575 g/l.

5. Composition according to claim 4, wherein said pyrethrinoid compound is present in a quantity of about 500 g/l.

6. Composition according to any one of the preceding claims, wherein said surfactant is selected from the group of ionic surfactants and non-ionic surfactants.

7. Composition according to any one of the preceding claims, wherein said C7 to C20 aromatic naphtha solvent is a C8 to C13 aromatic naphtha solvent.

8. Composition according to any one of the preceding claims, further comprising an acid at a concentration of 0,05 g/l to 3 g/l.

9. Composition according to claim 8, wherein said acid is acetic acid at a concentration of about 0,1 g/l.

10. Composition according to claim 9, comprising: a C7 to C20 aromatic naphtha solvent, one or more surfactants, 0,1 g/l acetic acid and cypermethrin.

11. Composition according to any one of the preceding claims, wherein said solvent is present in an amount from 200 g/l to 600 g/l.

12. Composition according to claim 11, wherein said solvent is present in an amount from 250 to 550 g/l.

13. Composition according to any one of the preceding claims, wherein said surfactant is present in an amount from 40 g/l to 200 g/l.

14. Composition according to claim 13, wherein said surfactant is present in an amount ranging from 60 to 150 g/l.